# EUROPEAN PATENT SPECIFICATION

(11) **EP 4 462 674 B1**
(45) Date of publication and mention of the grant of the patent: **23.09.2026**
(21) Application number: 23895987.8
(22) Date of filing: 28.06.2023
(51) Int. Cl.: H02S 50/10, H02S 40/32, H02S 40/30, H02S 40/40

(54) **PHOTOVOLTAIC INVERTER AND TEMPERATURE MEASUREMENT APPARATUS**
FOTOVOLTAISCHER WECHSELRICHTER UND TEMPERATURMESSVORRICHTUNG
ONDULEUR PHOTOVOLTAÏQUE ET APPAREIL DE MESURE DE TEMPÉRATURE

(30) Priority: 30.11.2022 CN 202211527833
(43) Date of publication of application: 13.11.2024
(73) Proprietor: Huawei Digital Power Technologies Co., Ltd., Shenzhen, Guangdong 518043 (CN)
(72) Inventor: HE, Xu, Shenzhen, Guangdong 518043 (CN); ZHANG, Fangpo, Shenzhen, Guangdong 518043 (CN)
(74) Representative: Epping - Hermann - Fischer
(86) International application number: PCT/CN2023/103480
(87) International publication number: WO 2024/113823

(56) References cited:
- CN-A- 108 122 871
- CN-A- 115 987 214
- CN-U- 209 170 720
- CN-U- 211 295 088
- KR-B1- 101 922 016
- US-A1- 2017 012 575

## Description

### TECHNICAL FIELD

This application relates to the field of photovoltaic power generation, and in particular, to a photovoltaic inverter and a temperature detection apparatus.

### BACKGROUND

Photovoltaic power generation is a technology of converting light energy into electric energy by using a photovoltaic effect of a semiconductor interface. A photovoltaic system may usually include a photovoltaic module, a photovoltaic terminal, an inverter, an alternating current power distribution device, and the like. The photovoltaic module is usually mounted on a photovoltaic rack that is fixedly supported on the ground, to generate power in a fixed place. To obtain a high output voltage or output current, a photovoltaic unit is usually a photovoltaic string formed by connecting a plurality of photovoltaic modules in series and/or paralle. The document KR 101 922 016 B1 is a relevant prior art.

Currently, each photovoltaic module is connected to a photovoltaic inverter or a photovoltaic direct current combiner box by using a photovoltaic terminal (also referred to as a connector). A photovoltaic terminal transmits, through a reliable electrical connection, a current output by a photovoltaic module to the inside of the photovoltaic inverter or the photovoltaic direct current combiner box, to implement current inversion, so that electric energy enters a terminal user or is connected to a power grid. An existing wiring process of a photovoltaic terminal is specifically: stripping a cable, and then using a cable-specific tool to separately crimp the stripped parts of the cable on two sides of the photovoltaic terminal, where one side of the cable is connected to a photovoltaic module, and the other side of the cable is connected to a photovoltaic inverter or a photovoltaic direct current combiner box. When the photovoltaic terminal and the cable are poorly crimped, excessively large contact resistance is likely to occur, causing heating and even aging and fire.

Currently, there is no implementation solution for detecting a temperature of a photovoltaic terminal connected between a photovoltaic module and an inverter. In view of this, a photovoltaic inverter needs to be designed, to monitor an actual temperature of the photovoltaic terminal in real time before the photovoltaic terminal catches fire, to ensure reliability of power generation of an entire system.

### SUMMARY

This application provides a photovoltaic inverter and a temperature detection apparatus. A temperature of a photovoltaic terminal is detected by using a temperature detection circuit, to monitor an actual temperature of the photovoltaic terminal in real time before the photovoltaic terminal catches fire, to ensure reliability of power generation of the entire photovoltaic inverter.

According to a first aspect, this application provides a photovoltaic inverter. The photovoltaic inverter includes: a plurality of photovoltaic terminals, a converter, a PCB circuit board, a temperature detection circuit, and a controller.

A plurality of photovoltaic modules are configured to be correspondingly connected to the plurality of photovoltaic terminals. The PCB circuit board includes an electrically conductive layer and at least one thermally conductive insulation layer. One end of each photovoltaic terminal is soldered on the PCB circuit board, and the other end is connected to a corresponding photovoltaic module in a thermally conductive manner. The electrically conductive layer is configured to transmit electric energy generated by each photovoltaic module to the converter. Each thermally conductive insulation layer is configured to conduct heat generated by at least one photovoltaic terminal. The temperature detection circuit is configured to detect a temperature of each thermally conductive insulation layer. The controller is configured to obtain a temperature of each of the plurality of photovoltaic terminals based on the temperature of each thermally conductive insulation layer.

The photovoltaic inverter provided in this application is used, so that heat generated by each photovoltaic terminal can be conducted by using the at least one thermally conductive insulation layer, and the heat can be finally conducted to the temperature detection circuit; and the temperature of each of the plurality of photovoltaic terminals is obtained by detecting the temperature of each thermally conductive insulation layer, to avoid a problem of aging, over-temperature, and fire caused by poor crimping of the photovoltaic terminals.

In a possible implementation, between each photovoltaic terminal and the temperature detection circuit, the PCB circuit board includes a thermally conductive path consisting of the thermally conductive insulation layer and solder joints, at which the plurality of photovoltaic terminals are connected to the PCB circuit board. Each photovoltaic terminal is soldered to the PCB circuit board to form a plurality of solder joints, and each thermally conductive insulation layer is configured to be connected to at least one solder joint, to form the thermally conductive path consisting of the thermally conductive insulation layer and the solder joints, formed between the photovoltaic terminals and the PCB circuit board, so that the temperature detection circuit determines the temperature of each photovoltaic terminal by detecting different thermally conductive insulation layers. With this design, a quantity of temperature detection circuits can be significantly reduced, and temperature detection costs are reduced. Each thermally conductive insulation layer includes a thermally conductive material, and the thermally conductive material is coated with an insulation material.

In a possible implementation, the thermally conductive material includes one or more of graphite, copper foil, or aluminum foil, and the insulation material includes one or more of epoxy resin, silicone rubber, insulation ceramic, or glass.

In a possible implementation, the thermally conductive material forms a thermally conductive layer, the insulation material forms an insulation layer, an upper surface and a lower surface of the thermally conductive layer are separately laminated with the insulation layer to form the thermally conductive insulation layer, and the insulation layer coats and is attached to the laminated thermally conductive layer.

Because the plurality of photovoltaic terminals and the converter are respectively disposed on two sides of the PCB circuit board, if only one temperature detection circuit is disposed, the temperature detection circuit is easily affected by an external ambient temperature, causing an error in temperature detection. In a possible implementation, the temperature detection circuit specifically includes a first temperature detection circuit and a second temperature detection circuit. The plurality of photovoltaic terminals and the converter are disposed on two sides of the PCB circuit board. The PCB circuit board includes a first thermally conductive insulation layer and a second thermally conductive insulation layer, the first thermally conductive insulation layer is close to a side of the converter, and the second thermally conductive insulation layer is close to a side of the photovoltaic terminals. The first temperature detection circuit is configured to detect a temperature of the first thermally conductive insulation layer. The second temperature detection circuit is configured to detect a temperature of the second thermally conductive insulation layer. The controller is configured to obtain the temperature of each of the plurality of photovoltaic terminals based on the temperatures of the first thermally conductive insulation layer and the second thermally conductive insulation layer. A thermally conductive path between the photovoltaic terminal and the first temperature detection circuit or the second temperature detection circuit may be: the photovoltaic terminal (plug-in point)-the solder joints formed between the photovoltaic terminal and the PCB circuit board-the first temperature detection circuit or the second temperature detection circuit. With this design, an overall design of the temperature detection circuit is simple and feasible, temperature detection is performed by using the first temperature detection circuit and the second temperature detection circuit, and temperature detection is more accurate.

In a possible implementation, the photovoltaic inverter further includes: a housing structure and a mounting panel. The housing structure is provided with a notch. The converter is disposed inside the housing structure. The mounting panel is provided with through holes for the photovoltaic terminals to penetrate. The mounting panel is configured to be mounted on the housing structure and plug the notch.

During specific mounting, the housing structure and the mounting panel may be fastened through soldering or bonding or by using a screw. Alternatively, in some possible implementations, the housing structure and the mounting panel may be an integrated structure. Before the plurality of photovoltaic terminals are soldered on the PCB circuit board, the plurality of photovoltaic terminals may be first fastened to the mounting panel, to position arrangement positions of the plurality of photovoltaic terminals, to facilitate soldering between the photovoltaic terminals and the PCB circuit board. After the photovoltaic terminals and the PCB circuit board are soldered, an overall structure including the photovoltaic terminals, the PCB circuit board, and the mounting panel is mounted in the notch of the housing structure. In a possible implementation, sealants or baffle plates are disposed in gaps between the photovoltaic terminals and the through holes, so that a sealed environment is formed inside the housing structure. Because there is a cooling device, such as a fan, inside the housing structure to reduce impact of the fan on temperature detection of the PCB circuit board and the temperature detection circuit, the sealants or the baffle plates are disposed in the gaps between the photovoltaic terminals and the through holes, so that the sealed environment is formed inside the housing structure.

In a possible implementation, each photovoltaic terminal includes a board-end terminal, a cable-end terminal, a first electrically conductive core, a second electrically conductive core, a first electrically conductive cable, and a second electrically conductive cable. A channel that penetrates through two ends of the board-end terminal is provided in the board-end terminal, the first electrically conductive core is slidably disposed in the channel of the board-end terminal, one end of the first electrically conductive cable is crimped on the first electrically conductive core, and the other end of the first electrically conductive cable is soldered on the PCB circuit board. A channel that penetrates through two ends of the cable-end terminal is provided in the cable-end terminal, the second electrically conductive core is slidably disposed in the channel of the cable-end terminal, one end of the second electrically conductive cable is crimped on the second electrically conductive core, and the other end of the second electrically conductive cable is connected to the photovoltaic module. After the board-end terminal is connected to the cable-end terminal, the first electrically conductive core establishes an electrical connection to the second electrically conductive core, so that a current output by the photovoltaic module is input to the converter by using the photovoltaic terminal.

To reduce a heat loss on the thermally conductive path, in a possible implementation, the photovoltaic inverter further includes: a terminal plug-in temperature detection circuit. The terminal plug-in temperature detection circuit is disposed at a position where the board-end terminal and the cable-end terminal in the photovoltaic terminal are connected, and is configured to detect the temperature of the photovoltaic terminal.

The terminal plug-in temperature detection circuit is adjacent to a photovoltaic terminal. This can greatly reduce the heat loss on a conduction path and can reflect the temperature of the photovoltaic terminal to a maximum extent, to make temperature protection more accurate. The terminal plug-in temperature detection circuit is disposed at a position where the board-end terminal and the cable-end terminal in the corresponding photovoltaic terminal are connected, to detect the temperature of the photovoltaic terminal.

In addition, in a possible implementation, when the temperature detection circuit is disposed on the PCB circuit board, the temperature detection circuit should be disposed at a position as far from a circuit with a large through-current as possible, to reduce a temperature detection error caused by heating due to thermal effect.

If the temperature detection circuit has to be disposed at the circuit with a large through-current, self-heating on the PCB circuit board may also be reduced by adding a groove or a protrusion on the circuit, and through-current heating may be reduced by increasing a width of an electrically conductive material at a position with a large through-current. According to a second aspect, this application provides a temperature detection apparatus, applied to a photovoltaic inverter. The temperature detection apparatus includes a temperature detection circuit, a PCB circuit board, and a controller. The photovoltaic inverter includes a plurality of photovoltaic terminals and a converter. The plurality of photovoltaic terminals are configured to be correspondingly connected to a plurality of photovoltaic modules. The PCB circuit board includes an electrically conductive layer and at least one thermally conductive insulation layer. One end of each photovoltaic terminal is soldered to the PCB circuit board, and the other end is connected to a corresponding photovoltaic module in a thermally conductive manner. The electrically conductive layer is configured to transmit electric energy generated by each photovoltaic module to the converter. Each thermally conductive insulation layer is configured to conduct heat generated by at least one photovoltaic terminal. The temperature detection circuit is configured to detect a temperature of each thermally conductive insulation layer.

These or other aspects of this application are more concise and easier to understand in descriptions of the following embodiments.

### BRIEF DESCRIPTION OF DRAWINGS

FIG. 1 is a diagram 1 of a structure of a photovoltaic inverter;
FIG. 2 is a diagram of a thermally conductive path between a photovoltaic terminal and a temperature detection circuit;
FIG. 3 is a diagram 2 of a structure of a photovoltaic inverter;
FIG. 4 is a diagram of a structure of a housing structure;
FIG. 5 is a diagram 1 of a structure of a photovoltaic terminal; and
FIG. 6 is a diagram 2 of a structure of a photovoltaic terminal.

### DESCRIPTION OF EMBODIMENTS

To make objectives, technical solutions, and advantages of this application clearer, the following further describes this application in detail with reference to the accompanying drawings. However, example implementations may be implemented in a plurality of forms and should not be construed as being limited to implementations described herein.

On the contrary, these implementations are provided such that this application is more comprehensive and complete and fully conveys the concept of the example implementations to a person skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To make objectives, technical solutions, and advantages of this application clearer, the following further describes this application in detail with reference to the accompanying drawings. A specific operation method in a method embodiment may also be applied to an apparatus embodiment or a system embodiment. It should be noted that, in descriptions of this application, "at least one" means one or more, and "a plurality of" means two or more. In view of this, in embodiments of the present invention, "a plurality of" may also be understood as "at least two". The term "and/or" describes an association relationship between associated objects and indicates that three relationships may exist. For example, A and/or B may represent the following three cases: Only A exists, both A and B exist, and only B exists. In addition, the character "/", unless otherwise specified, generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that, in embodiments of this application, "connection" means an electrical connection, and a connection between two electrical elements may be a direct or indirect connection between the two electrical elements. For example, a connection between A and B may be a direct connection between A and B, or may be an indirect connection between A and B through one or more other electrical elements. For example, the connection between A and B may also represent that A is directly connected to C, C is directly connected to B, A and B are connected through C.

In a photovoltaic system, a direct current source is generally formed by a photovoltaic module on a direct current side. The photovoltaic module is connected to a direct current combiner box by using a photovoltaic terminal. Currents of module strings are converged by using the direct current combiner box and connected to a converter. The converter converts a direct current generated by the photovoltaic module into an alternative current, and the alternating current is connected to a power grid to complete a photovoltaic power generation process.

With an increasingly wide application of photovoltaic power generation, an increasing number of problems of the photovoltaic system are exposed to people, and a serious problem is a fire problem caused by the photovoltaic system, which may cause huge human body and property losses.

There are many reasons for a fire of the photovoltaic system, for example, a fire caused by hot spot effect generated by the photovoltaic module. The hot spot effect is as follows: When a photovoltaic module in a series branch is shaded, the photovoltaic module is considered as a load consuming energy generated by another illuminated photovoltaic module. As a result, the shaded photovoltaic module heats up. Consequently, a local current and a local voltage of the photovoltaic module increase, and a local temperature rise occurs on the photovoltaic module. This causes spontaneous combustion of the photovoltaic module.

For another example, when a cable connected to the photovoltaic terminal is poorly crimped, excessively large contact resistance is likely to occur, causing heating of a direct current arc and even aging and fire; or when a cable connected to the photovoltaic terminal is soldered to the converter or the photovoltaic module, if an area of a solder joint is excessively small, resistance is also increased, to cause a fire.

Currently, there are some temperature detection and protection solutions for the photovoltaic module, but no implementation solution for performing temperature detection on a photovoltaic terminal connected between the photovoltaic module and the converter is provided. In view of this, this application provides a photovoltaic inverter, to monitor an actual temperature of the photovoltaic terminal in real time before the photovoltaic terminal catches fire, to ensure reliability of an entire system.

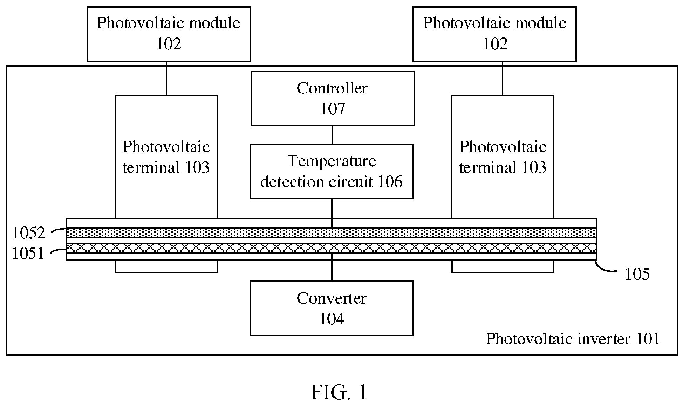

FIG. 1 is a diagram 1 of a structure of a photovoltaic inverter. The photovoltaic inverter 101 includes: a plurality of photovoltaic terminals 103, a converter 104, a printed circuit board (PCB) 105, a temperature detection circuit 106, and a controller 107. The plurality of photovoltaic terminals 103 are configured to be correspondingly connected to a plurality of photovoltaic modules 102.

The PCB circuit board 105 includes: an electrically conductive layer 1051 and at least one thermally conductive insulation layer 1052. One end of each photovoltaic terminal 103 is soldered on the PCB circuit board 105, and the other end is connected to a corresponding photovoltaic module 102 in a thermally conductive manner. The electrically conductive layer 1051 is configured to transmit electric energy generated by each photovoltaic module 102 to the converter 104. Each thermally conductive insulation layer 1052 is configured to conduct heat generated by at least one photovoltaic terminal 103.

The temperature detection circuit 106 is configured to detect a temperature of each thermally conductive insulation layer 1052. The controller 107 is configured to obtain a temperature of each of the plurality of photovoltaic terminals 103 based on the temperature of each thermally conductive insulation layer 1052.

The photovoltaic module 102 converts solar energy into electric energy by using photovoltaic effect, and the converter 104 converts the electric energy output by the photovoltaic module 102 into a proper alternating current or direct current and supplies the current to a power grid or a load.

The photovoltaic module 102 is connected to the converter 104 by using the photovoltaic terminal 103 (a connector structure). The photovoltaic terminal 103 has a small contact resistance, and has performance such as waterproof, high temperature resistance, corrosion resistance, and high insulation.

The PCB circuit board 105 may be any suitable type of PCB, for example, a multilayer board, a flexible PCB, a rigid PCB, or a rigid-flex PCB. The electrically conductive layer 1051 may be a copper busbar, an aluminum busbar, a copper-clad aluminum busbar, or a layered body made of copper and/or aluminum, or may be an electrically conductive busbar, an electrically conductive sheet, or a layered body made of another electrically conductive material. This is not specifically limited herein.

The thermally conductive insulation layer 1052 may specifically include an insulation layer and a thermally conductive layer (not specifically shown in FIG. 1). A material of the insulation layer includes but is not limited to materials such as epoxy resin, silicone rubber, insulation ceramic, and glass, and a composite material made of any two or more of these materials. The thermally conductive layer may be one or more of graphite, copper foil, or aluminum foil, where the copper foil may be a copper clad plate (direct bonding copper, DBC), an active metal brazing copper clad plate (active metal bonding, AMB), or the like.

An upper surface and a lower surface of the thermally conductive layer are separately laminated with the insulation layer, and the insulation layer coats and is attached to the laminated thermally conductive layer, to form the thermally conductive insulation layer. The PCB circuit board 105 may further include a plurality of adhesive layers. The adhesive layers may be separately disposed between the electrically conductive layer 1051 and the thermally conductive insulation layer 1052, to bond the electrically conductive layer 1051 and the thermally conductive insulation layer 1052 together. The adhesive layers may be made of an acrylic adhesive or an epoxy resin adhesive, or may be made of another appropriate adhesive material. In addition, another auxiliary fastening means may also be provided, for example, a clamping component is provided, to fasten a plurality of different material layers in the PCB circuit board 105 together. This is not specifically limited herein.

The temperature detection circuit 106 may include a temperature detection device such as a thermistor or an infrared temperature detection sensor. The thermistor may be specifically any one of the following: a positive temperature coefficient (positive temperature coefficient, PTC) thermistor whose resistance value changes positively with a change of a temperature, or a negative temperature system (NTC) thermistor whose resistance value changes inversely with a change of a temperature. In addition, a plurality of temperature detection circuits 106 may be disposed to respectively detect temperatures of the thermally conductive insulation layers 1052.

The controller 107 may be a general-purpose central processing unit (CPU), a general-purpose processor, a digital signal processing (DSP), an application-specific integrated circuit (ASIC), a field-programmable gate array (FPGA) or another programmable logic device, a transistor logic device, a hardware component, or any combination thereof. The controller may implement or execute various example logical blocks, modules, and circuits described with reference to content disclosed in this application. Alternatively, the processor may be a combination implementing a computing function, for example, a combination of one or more microprocessors, or a combination of a DSP and a microprocessor. In addition, the controller 107 may further include an analog-to-digital converter (ADC), configured to convert an input analog quantity detected by the temperature detection circuit 106 into a digital quantity, to determine the temperature of each photovoltaic terminal 103.

Two ends of the photovoltaic terminal 103 are connected to a cable, and are respectively connected to the photovoltaic module 102 and the converter 104 through the cable. Specifically, after the cable is stripped, the stripped parts of the cable may be separately connected to the two ends of the photovoltaic terminal 103 by using a specialized crimping tool. However, when the cable is poorly crimped to the photovoltaic terminal 103, in a least severe case, internal resistance on a direct current side is easily affected, which consequently reduces power generation efficiency of the photovoltaic inverter 101; or in a worse case, poor contact is caused and consequently causes the photovoltaic terminal 103 to be heated up or even burnt, and further causes the converter 104 to be burnt, or at worst, causes a large-scale fire.

The photovoltaic terminal 103 should be mounted in a position away from sunlight, rain, or the like, to avoid aging of an interface in the photovoltaic terminal 103 or rust of the cable. However, with development of photovoltaic technologies, a capacity of a single photovoltaic module 102 is also increasing, and an output current of the photovoltaic module 102 is also gradually increasing. In a process of mounting and using the photovoltaic terminal 103, an increasing quantity of photovoltaic terminals 103 are melted and burnt, or even burning of the converter 104 is caused. Therefore, in this application, the temperature detection circuit 106 performs real-time temperature detection on the photovoltaic terminal 103, to indirectly determine a crimping status of the photovoltaic terminal 103, to ensure that the photovoltaic inverter 101 can work normally.

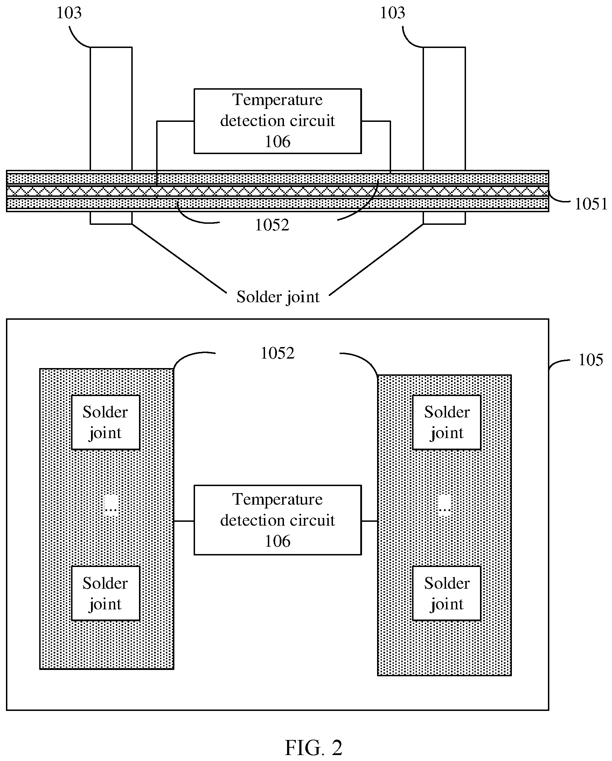

FIG. 2 is a diagram of a thermally conductive path between a photovoltaic terminal and a temperature detection circuit. Each photovoltaic terminal 103 is soldered on the PCB circuit board 105, to form a plurality of solder joints. Between each photovoltaic terminal 103 and the temperature detection circuit 106, the PCB circuit board 105 includes a thermally conductive path consisting of a plurality of solder joints, at which the photovoltaic terminal 103 is connected to the PCB circuit board 105, and the thermally conductive insulation layer 1052, so that the temperature detection circuit 106 obtains a temperature of each photovoltaic terminal 103 by detecting different thermally conductive insulation layers 1052. With this design, a quantity of temperature detection circuits 106 can be significantly reduced, and temperature detection costs are reduced.

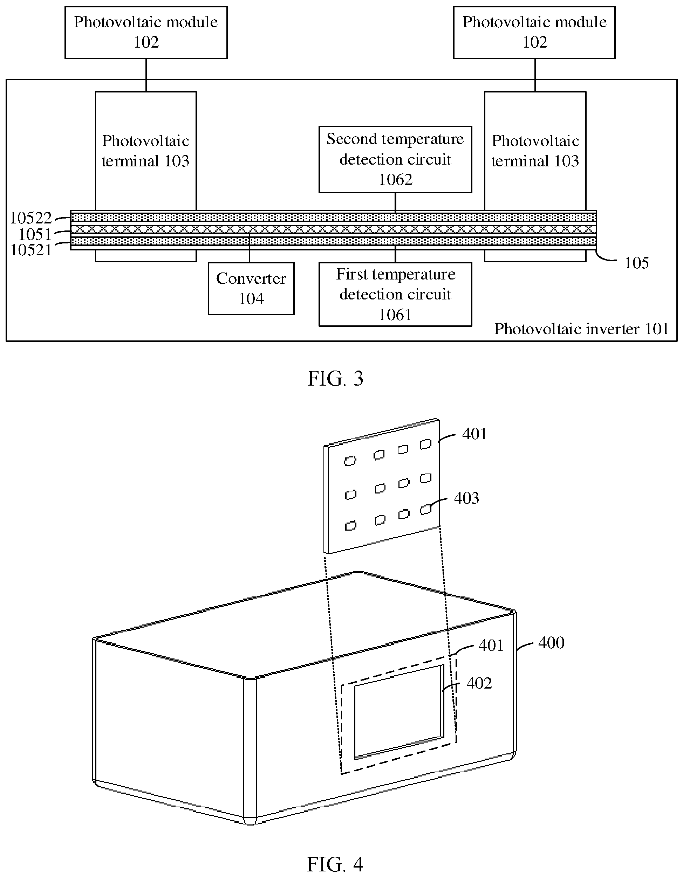

Because the plurality of photovoltaic terminals 103 and the converter 104 are respectively disposed on two sides of the PCB circuit board 105, if only one temperature detection circuit 106 is disposed, the temperature detection circuit 106 is easily affected by an external ambient temperature, causing an error in temperature detection. FIG. 3 is a diagram 2 of a structure of a photovoltaic inverter. The temperature detection circuit 106 specifically includes a first temperature detection circuit 1061 and a second temperature detection circuit 1062. The PCB circuit board 105 includes a first thermally conductive insulation layer 10521 and a second thermally conductive insulation layer 10522. The first thermally conductive insulation layer 10521 is close to a side of the converter 104, and the second thermally conductive insulation layer 105222 is close to a side of the photovoltaic terminals 103.

The first temperature detection circuit 1061 is configured to detect a temperature of the first thermally conductive insulation layer 10521. The second temperature detection circuit 1062 is configured to detect a temperature of the second thermally conductive insulation layer 10522. The controller is configured to obtain a temperature of each of the plurality of photovoltaic terminals 103 based on the temperatures of the first thermally conductive insulation layer 10521 and the second thermally conductive insulation layer 10522.

Because a cable crimped with the photovoltaic terminal 103 is soldered on the PCB circuit board 105, the first temperature detection circuit 1061 may detect a temperature of a side on which solder joints between the photovoltaic terminal 103 and the PCB circuit board 105 are formed, and the second temperature detection circuit 1062 may detect a temperature of a side other than the side on which the solder joints between the photovoltaic terminal 103 and the PCB circuit board 105 are formed.

In this way, a thermally conductive path between the photovoltaic terminal 103 and the first temperature detection circuit 1061 or the second temperature detection circuit 1062 may be: the photovoltaic terminal 103 (plug-in point)-the solder joints formed between the photovoltaic terminal 103 and the PCB circuit board 105-the first temperature detection circuit 1061/the second temperature detection circuit 1062. With this design, an overall design of the temperature detection circuit 106 is simple and feasible, temperature detection is performed by using the first temperature detection circuit 1061 and the second temperature detection circuit 1062, and temperature detection is more accurate.

FIG. 4 is a diagram of a structure of a housing structure. The photovoltaic inverter 101 further includes: the housing structure 400 and a mounting panel 401. The housing structure 400 is provided with a notch 402. The converter 104 is disposed inside the housing structure 400 (not shown in FIG. 4). The mounting panel 401 is provided with through holes 403 for each photovoltaic terminal 103 to penetrate. The mounting panel 401 is configured to be mounted on the housing structure 400 and block the notch 402.

During specific mounting, the housing structure 400 and the mounting panel 401 may be fastened through soldering or bonding or by using a screw. Alternatively, in some possible implementations, the housing structure 400 and the mounting panel 401 may be an integrated structure. For example, the mounting panel 401 may be molded in a manner such as die casting molding or stamping molding, to fabricate the housing structure 400 and the mounting panel 401 as an integrated mechanical part. Specifically, before the plurality of photovoltaic terminals 103 are soldered on the PCB circuit board 105, the plurality of photovoltaic terminals 103 may be first fastened to the mounting panel 401, to position arrangement positions of the plurality of photovoltaic terminals 103, to facilitate soldering between the photovoltaic terminals 103 and the PCB circuit board 105. After the photovoltaic terminals 103 and the PCB circuit board 105 are soldered, an overall structure including the photovoltaic terminals 103, the PCB circuit board 105, and the mounting panel 401 is mounted in the notch 402 of the housing structure 400.

Because there is a cooling device, such as a fan, inside the housing structure 400, to reduce impact of the cooling device on temperature detection of the PCB circuit board and the temperature detection circuit 106, sealants or baffle plates may be disposed in gaps between the photovoltaic terminals 103 and the through holes, so that a sealed environment is formed inside the housing structure 400.

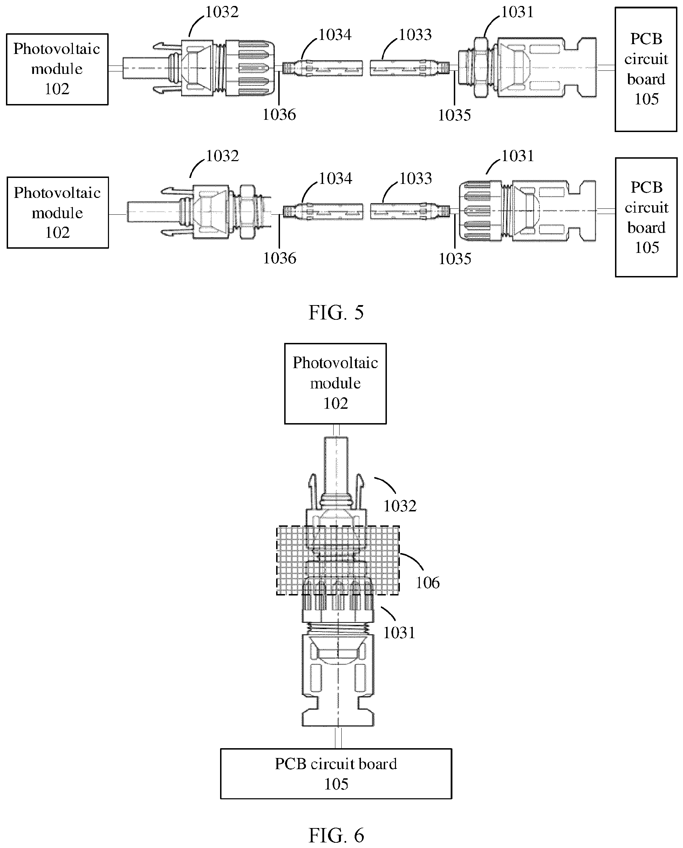

In a possible implementation, FIG. 5 is a diagram 1 of a structure of a photovoltaic terminal. Each photovoltaic terminal 103 may specifically include a board-end terminal 1031, a cable-end terminal 1032, a first electrically conductive core 1033, a second electrically conductive core 1034, a first electrically conductive cable 1035, and a second electrically conductive cable 1036. A channel that penetrates through two ends of the board-end terminal 1031 is provided in the board-end terminal 1031, the first electrically conductive core 1033 is slidably disposed in the channel of the board-end terminal 1031, one end of the first electrically conductive cable 1035 is crimped on the first electrically conductive core 1033, and the other end of the first electrically conductive cable 1035 is soldered on the PCB circuit board 105. A channel that penetrates through two ends of the cable-end terminal 1032 is provided in the cable-end terminal 1032, the second electrically conductive core 1034 is slidably disposed in the channel of the cable-end terminal 1032, one end of the second electrically conductive cable 1036 is crimped on the second electrically conductive core 1034, and the other end of the second electrically conductive cable 1036 is connected to the photovoltaic module 102.

To reduce a heat loss on a thermally conductive path, in a possible implementation, FIG. 6 is a diagram 2 of a structure of a photovoltaic terminal. The photovoltaic inverter 101 further includes a terminal plug-in temperature detection circuit 601. The terminal plug-in temperature detection circuit 601 is disposed at a position where the board-end terminal 1031 and the cable-end terminal 1032 in the photovoltaic terminal are connected, and is configured to detect a temperature of the photovoltaic terminal 103.

The terminal plug-in temperature detection circuit 601 is adjacent to the photovoltaic terminal 103. This can greatly reduce the heat loss on a conduction path and can reflect the temperature of the photovoltaic terminal 103 to a maximum extent, to make temperature protection more accurate. The terminal plug-in temperature detection circuit 601 is disposed at the position where the board-end terminal 1031 and the cable-end terminal 1032 in the corresponding photovoltaic terminal 103 are connected, to detect the temperature of the photovoltaic terminal 103.

In addition, in a possible implementation, when the temperature detection circuit 106 is disposed on the PCB circuit board 105, the temperature detection circuit 106 should be disposed at a position as far from a circuit with a large through-current as possible, to reduce a temperature detection error caused by heating due to thermal effect.

If the temperature detection circuit 106 has to be disposed at the circuit with a large through-current, self-heating on the PCB circuit board 105 may also be reduced by adding a groove or a protrusion on the circuit, and through-current heating may be reduced by increasing a width of an electrically conductive material at a position with a large through-current.

The photovoltaic inverter provided in this application is used, so that heat generated by each photovoltaic terminal can be conducted by using the at least one thermally conductive insulation layer, and the heat can be finally conducted to the temperature detection circuit; and the temperature of each of the plurality of photovoltaic terminals is obtained by detecting the temperature of each thermally conductive insulation layer, to avoid a problem of aging, over-temperature, and fire caused by poor crimping of the photovoltaic terminals.

Based on a same idea, this application further provides a temperature detection apparatus, applied to the photovoltaic inverter 101. The temperature detection apparatus includes a temperature detection circuit, a PCB circuit board, and a controller. The photovoltaic inverter includes a plurality of photovoltaic terminals and a converter. The plurality of photovoltaic terminals are configured to be correspondingly connected to a plurality of photovoltaic modules. The PCB circuit board includes an electrically conductive layer and at least one thermally conductive insulation layer. One end of each photovoltaic terminal is soldered to the PCB circuit board, and the other end is connected to a corresponding photovoltaic module in a thermally conductive manner. The electrically conductive layer is configured to transmit electric energy generated by each photovoltaic module to the converter. Each thermally conductive insulation layer is configured to conduct heat generated by at least one photovoltaic terminal. The temperature detection circuit is configured to detect a temperature of each thermally conductive insulation layer.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A photovoltaic inverter (101), wherein the photovoltaic inverter comprises:
a plurality of photovoltaic terminals (103), a converter, a PCB circuit board (105), a temperature detection circuit (106), a housing structure and a controller (107),
the converter (104) and the PCB circuit board are disposed inside the housing structure;
the photovoltaic terminals penetrating the housing structure, each having one end inside the housing structure electrically connected to the PCB circuit board and another end outside the housing structure, wherein the photovoltaic terminals are configured to be connected to photovoltaic modules;
the PCB circuit board comprises an electrically conductive layer (1051) and a thermally conductive insulation layer (1052), wherein the electrically conductive layer is configured to transmit electric energy generated by the plurality of photovoltaic modules to the converter, and the thermally conductive insulation layer is configured to conduct heat from the photovoltaic terminal to the temperature detection circuit;
the temperature detection circuit is configured to detect a temperature of the thermally conductive insulation layer; and
the controller is configured to detect a temperature of at least one of the photovoltaic terminals based on the temperature of the thermally conductive insulation layer.

2. The photovoltaic inverter according to claim 1, wherein, between one of the photovoltaic terminals and the temperature detection circuit, the PCB circuit board comprises a thermally conductive path consisting of the thermally conductive insulation layer and the connection joint, at which the one of the photovoltaic terminal is connected to the PCB circuit board.

3. The photovoltaic inverter according to claim 1 or 2, wherein each thermally conductive insulation layer comprises a thermally conductive material, and the thermally conductive material is coated with an insulation material.

4. The photovoltaic inverter according to claim 3, wherein the thermally conductive material comprises one or more of graphite, copper foil, or aluminum foil.

5. The photovoltaic inverter according to claim 3, wherein the insulation material comprises one or more of epoxy resin, silicone rubber, insulation ceramic, or glass.

6. The photovoltaic inverter according to claim 3, wherein the thermally conductive material forms a thermally conductive layer, the insulation material forms an insulation layer, an upper surface and a lower surface of the thermally conductive layer are separately laminated with the insulation layer, to form the thermally conductive insulation layer, and the insulation layer coats and is attached to the laminated thermally conductive layer.

7. The photovoltaic inverter according to any one of claims 1 to 6, wherein the temperature detection circuit specifically comprises a first temperature detection circuit and a second temperature detection circuit, the plurality of photovoltaic terminals and the converter are respectively disposed on two sides of the PCB circuit board, the PCB circuit board comprises a first thermally conductive insulation layer and a second thermally conductive insulation layer, the first thermally conductive insulation layer is close to a side of the converter, and the second thermally conductive insulation layer is close to a side of the plurality of photovoltaic terminal;
the first temperature detection circuit is configured to detect a temperature of the first thermally conductive insulation layer;
the second temperature detection circuit is configured to detect a temperature of the second thermally conductive insulation layer; and
the controller is configured to obtain the temperature of each of the plurality of photovoltaic terminals based on the temperatures of the first thermally conductive insulation layer and the second thermally conductive insulation layer.

8. The photovoltaic inverter according to any one of claims 1 to 7, wherein the photovoltaic inverter further comprises a mounting panel, the housing structure is provided with a notch, the converter is disposed inside the housing structure, the mounting panel is provided with through holes for the photovoltaic terminals to penetrate, and the mounting panel is configured to be mounted on the housing structure and plug the notch.

9. The photovoltaic inverter according to claim 8, wherein sealants or baffle plates are disposed in gaps between the photovoltaic terminals and the through holes, so that a sealed environment is formed inside the housing structure.

10. The photovoltaic inverter according to any one of claims 1 to 9, wherein each photovoltaic terminal comprises a board-end terminal, a cable-end terminal, a first electrically conductive core, a second electrically conductive core, a first electrically conductive cable, and a second electrically conductive cable; a channel that penetrates through two ends of the board-end terminal is provided in the board-end terminal, the first electrically conductive core is slidably disposed in the channel of the board-end terminal, one end of the first electrically conductive cable is crimped on the first electrically conductive core, and the other end of the first electrically conductive cable is soldered on the PCB circuit board; a channel that penetrates through two ends of the cable-end terminal is provided in the cable-end terminal, the second electrically conductive core is slidably disposed in the channel of the cable-end terminal, one end of the second electrically conductive cable is crimped on the second electrically conductive core, and the other end of the second electrically conductive cable is connected to the photovoltaic module; and
after the board-end terminal is connected to the cable-end terminal, the first electrically conductive core establishes an electrical connection to the second electrically conductive core, so that a current output by the photovoltaic module is input to the converter by using the photovoltaic terminal.

11. The photovoltaic inverter according to claim 10, wherein the photovoltaic inverter further comprises a terminal plug-in temperature detection circuit, wherein the terminal plug-in temperature detection circuit is disposed at a plug-in position between the board-end terminal and the cable-end terminal in the photovoltaic terminal, and is configured to detect a temperature at the plug-in position of the photovoltaic terminal.

12. The photovoltaic inverter according to claim 1, wherein the thermally conductive insulation layer is embedded in the PCB circuit and disposed between the temperature detection circuit and the connection joint, at which one of the photovoltaic terminals is connected to the PCB circuit board.

13. A temperature detection apparatus, applied to a photovoltaic inverter (101), wherein the temperature detection apparatus comprises a temperature detection circuit (106), a PCB circuit board (105), and a controller (107), the photovoltaic inverter comprises a plurality of photovoltaic terminals and a converter (104), and the plurality of photovoltaic terminals are configured to be correspondingly connected to a plurality of photovoltaic modules;
the PCB circuit board comprises an electrically conductive layer (1051) and a thermally conductive insulation layer (1052), one end of each photovoltaic terminal is connected to the PCB circuit board;
the electrically conductive layer is configured to transmit electric energy generated by the photovoltaic modules to the converter, and the thermally conductive insulation layer is configured to conduct heat generated by at least one photovoltaic terminal to the temperature detection circuit;
the temperature detection circuit is configured to detect a temperature of the thermally conductive insulation layer; and
the controller is configured to detect a temperature of at least one of the photovoltaic terminals based on the temperature of the thermally conductive insulation layer.

14. The temperature detection apparatus according to claim 13, wherein, the thermally conductive insulation layer is embedded in the PCB circuit and disposed between the temperature detection circuit and the connection joint, at which at least one of the photovoltaic terminals is connected to the PCB circuit board.

## Patentansprüche

1. Fotovoltaischer Wechselrichter (101), wobei der fotovoltaische Wechselrichter Folgendes umfasst:
eine Vielzahl fotovoltaischer Anschlüsse (103), einen Wandler, eine PCB-Leiterplatte (105), eine Temperaturdetektionsschaltung (106), eine Gehäusestruktur und eine Steuerung (107),
der Wandler (104) und die PCB-Leiterplatte innerhalb der Gehäusestruktur angeordnet sind;
die fotovoltaischen Anschlüsse die Gehäusestruktur durchdringen, wobei jeder ein Ende innerhalb der Gehäusestruktur, das elektrisch mit der PCB-Leiterplatte verbunden ist, und ein anderes Ende außerhalb der Gehäusestruktur aufweist, wobei die fotovoltaischen Anschlüsse dazu konfiguriert sind, mit fotovoltaischen Modulen verbunden zu sein;
die PCB-Leiterplatte eine elektrisch leitfähige Schicht (1051) und eine thermisch leitfähige Isolierschicht (1052) umfasst,
wobei die elektrisch leitfähige Schicht dazu konfiguriert ist, elektrische Energie, die durch die Vielzahl fotovoltaischer Module erzeugt wird, an den Wandler zu übertragen, und die thermisch leitfähige Isolierschicht dazu konfiguriert ist, Hitze von dem fotovoltaischen Anschluss zu der Temperaturdetektionsschaltung zu leiten;
die Temperaturdetektionsschaltung dazu konfiguriert ist, eine Temperatur der thermisch leitfähigen Isolierschicht zu detektieren; und
die Steuerung dazu konfiguriert ist, eine Temperatur mindestens eines der fotovoltaischen Anschlüsse basierend auf der Temperatur der thermisch leitfähigen Isolierschicht zu detektieren.

2. Fotovoltaischer Wechselrichter nach Anspruch 1, wobei, zwischen einem der fotovoltaischen Anschlüsse und der Temperaturdetektionsschaltung, die PCB-Leiterplatte einen thermisch leitfähigen Pfad aufweist, der aus der thermisch leitfähigen Isolierschicht und der Verbindungsstelle besteht, an welcher der eine der fotovoltaischen Anschlüsse mit der PCB-Leiterplatte verbunden ist.

3. Fotovoltaischer Wechselrichter nach Anspruch 1 oder 2, wobei jede thermisch leitfähige Isolierschicht ein thermisch leitfähiges Material umfasst und das thermisch leitfähige Material mit einem Isoliermaterial beschichtet ist.

4. Fotovoltaischer Wechselrichter nach Anspruch 3, wobei das thermisch leitfähige Material eines oder mehrere von Graphit, Kupferfolie oder Aluminiumfolie umfasst.

5. Fotovoltaischer Wechselrichter nach Anspruch 3, wobei das Isoliermaterial eines oder mehrere von Epoxidharz, Silikonkautschuk, Isolierkeramik oder Glas umfasst.

6. Fotovoltaischer Wechselrichter nach Anspruch 3, wobei das thermisch leitfähige Material eine thermisch leitfähige Schicht bildet, das Isoliermaterial eine Isolierschicht bildet, eine obere Oberfläche und eine untere Oberfläche der thermisch leitfähigen Schicht separat mit der Isolierschicht laminiert sind, um die thermisch leitfähige Isolierschicht zu bilden, und die Isolierschicht die laminierte thermisch leitfähige Schicht beschichtet und an dieser befestigt ist.

7. Fotovoltaischer Wechselrichter nach einem der Ansprüche 1 bis 6, wobei die Temperaturdetektionsschaltung speziell eine erste Temperaturdetektionsschaltung und eine zweite Temperaturdetektionsschaltung umfasst, die Vielzahl fotovoltaischer Anschlüsse und der Wandler jeweils auf zwei Seiten der PCB-Leiterplatte angeordnet sind, die PCB-Leiterplatte eine erste thermisch leitfähige Isolierschicht und eine zweite thermisch leitfähige Isolierschicht umfasst, sich die erste thermisch leitfähige Isolierschicht nahe einer Seite des Wandlers befindet und sich die zweite thermisch leitfähige Isolierschicht nahe einer Seite der Vielzahl fotovoltaischer Anschlüsse befindet;
die erste Temperaturdetektionsschaltung dazu konfiguriert ist, eine Temperatur der ersten thermisch leitfähigen Isolierschicht zu detektieren;
die zweite Temperaturdetektionsschaltung dazu konfiguriert ist, eine Temperatur der zweiten thermisch leitfähigen Isolierschicht zu detektieren; und
die Steuerung dazu konfiguriert ist, die Temperatur jedes der Vielzahl fotovoltaischer Anschlüsse basierend auf den Temperaturen der ersten thermisch leitfähigen Isolierschicht und der zweiten thermisch leitfähigen Isolierschicht zu erlangen.

8. Fotovoltaischer Wechselrichter nach einem der Ansprüche 1 bis 7, wobei der fotovoltaische Wechselrichter ferner ein Montagepaneel umfasst, die Gehäusestruktur mit einer Aussparung versehen ist, der Wandler innerhalb der Gehäusestruktur angeordnet ist, das Montagepaneel mit Durchgangslöchern zum Durchdringen durch die fotovoltaischen Anschlüsse versehen ist und das Montagepaneel dazu konfiguriert ist, auf der Gehäusestruktur montiert zu sein und die Aussparung zu verschließen.

9. Fotovoltaischer Wechselrichter nach Anspruch 8, wobei Dichtungsmittel oder Blendenplatten in Spalten zwischen den fotovoltaischen Anschlüssen und den Durchgangslöchern angeordnet sind, sodass eine abgedichtete Umgebung innerhalb der Gehäusestruktur gebildet ist.

10. Fotovoltaischer Wechselrichter nach einem der Ansprüche 1 bis 9, wobei jeder fotovoltaische Anschluss einen Plattenendeanschluss, einen Kabelendeanschluss, einen ersten elektrisch leitfähigen Kern, einen zweiten elektrisch leitfähigen Kern, ein erstes elektrisch leitfähiges Kabel und ein zweites elektrisch leitfähiges Kabel umfasst; ein Kanal, der zwei Enden des Plattenendeanschlusses durchdringt, in dem Plattenendeanschluss bereitgestellt ist, der erste elektrisch leitfähige Kern gleitbar in dem Kanal des Plattenendeanschlusses angeordnet ist, ein Ende des ersten elektrisch leitfähigen Kabels auf dem ersten elektrisch leitfähigen Kern gecrimpt ist und das andere Ende des ersten elektrisch leitfähigen Kabels auf der PCB-Leiterplatte gelötet ist; ein Kanal, der zwei Enden des Kabelendeanschlusses durchdringt, in dem Kabelendeanschluss bereitgestellt ist, der zweite elektrisch leitfähige Kern gleitbar in dem Kanal des Kabelendeanschlusses angeordnet ist, ein Ende des zweiten elektrisch leitfähigen Kabels auf dem zweiten elektrisch leitfähigen Kern gecrimpt ist und das andere Ende des zweiten elektrisch leitfähigen Kabels mit dem fotovoltaischen Modul verbunden ist; und,
nachdem der Plattenendeanschluss mit den Kabelendeanschluss verbunden wurde, der erste elektrisch leitfähige Kern eine elektrische Verbindung mit dem zweiten elektrisch leitfähigen Kern herstellt, sodass ein Strom, der durch das fotovoltaische Modul ausgegeben wird, unter Verwendung des fotovoltaischen Anschlusses in den Wandler eingegeben wird.

11. Fotovoltaischer Wechselrichter nach Anspruch 10, wobei der fotovoltaische Wechselrichter ferner eine Anschlussstecktemperaturdetektionsschaltung umfasst, wobei die Anschlussstecktemperaturdetektionsschaltung an einer Steckposition zwischen dem Plattenendeanschluss und dem Kabelendeanschluss in dem fotovoltaischen Anschluss angeordnet ist und dazu konfiguriert ist, eine Temperatur an der Steckposition des fotovoltaischen Anschlusses zu detektieren.

12. Fotovoltaischer Wechselrichter nach Anspruch 1, wobei die thermisch leitfähige Isolierschicht in die PCB-Leiterplatte eingebettet und zwischen der Temperaturdetektionsschaltung und der Verbindungsstelle angeordnet ist, an der einer der fotovoltaischen Anschlüsse mit der PCB-Leiterplatte verbunden ist.

13. Temperaturdetektionsvorrichtung, die auf einen fotovoltaischen Wechselrichter (101) angewandt ist, wobei die Temperaturdetektionsvorrichtung eine Temperaturdetektionsschaltung (106), eine PCB-Leiterplatte (105) und eine Steuerung (107) umfasst, der fotovoltaische Wechselrichter eine Vielzahl fotovoltaischer Anschlüsse und einen Wandler (104) umfasst und die Vielzahl fotovoltaischer Anschlüsse dazu konfiguriert ist, entsprechend mit einer Vielzahl fotovoltaischer Module verbunden zu sein;
die PCB-Leiterplatte eine elektrisch leitfähige Schicht (1051) und eine thermisch leitfähige Isolierschicht (1052) umfasst, ein Ende jedes fotovoltaischen Anschlusses mit der PCB-Leiterplatte verbunden ist;
die elektrisch leitfähige Schicht dazu konfiguriert ist, elektrische Energie, die durch die fotovoltaischen Module erzeugt wird, an den Wandler zu übertragen, und die thermisch leitfähige Isolierschicht dazu konfiguriert ist, Hitze, die durch mindestens einen fotovoltaischen Anschluss erzeugt wird, zu der Temperaturdetektionsschaltung zu leiten;
die Temperaturdetektionsschaltung dazu konfiguriert ist, eine Temperatur der thermisch leitfähigen Isolierschicht zu detektieren; und
die Steuerung dazu konfiguriert ist, eine Temperatur mindestens eines der fotovoltaischen Anschlüsse basierend auf der Temperatur der thermisch leitfähigen Isolierschicht zu detektieren.

14. Temperaturdetektionsvorrichtung nach Anspruch 13, wobei die thermisch leitfähige Isolierschicht in die PCB-Leiterplatte eingebettet und zwischen der Temperaturdetektionsschaltung und der Verbindungsstelle angeordnet ist, an der mindestens einer der fotovoltaischen Anschlüsse mit der PCB-Leiterplatte verbunden ist.

## Revendications

1. Onduleur photovoltaïque (101), dans lequel l'onduleur photovoltaïque comprend :
une pluralité de bornes photovoltaïques (103), un convertisseur, une carte de circuit imprimé (105), un circuit de détection de température (106), une structure de boîtier et un dispositif de commande (107),
le convertisseur (104) et la carte de circuit imprimé sont disposés à l'intérieur de la structure de boîtier ;
les bornes photovoltaïques traversant la structure de boîtier, chacune ayant une extrémité à l'intérieur de la structure de boîtier connectée électriquement à la carte de circuit imprimé et une autre extrémité à l'extérieur de la structure de boîtier, dans lequel les bornes photovoltaïques sont configurées pour être connectées à des modules photovoltaïques ;
la carte de circuit imprimé comprend une couche électroconductrice (1051) et une couche d'isolation thermoconductrice (1052),
dans lequel la couche électroconductrice est configurée pour transmettre une énergie électrique générée par la pluralité de modules photovoltaïques au convertisseur, et la couche d'isolation thermoconductrice est configurée pour conduire la chaleur depuis la borne photovoltaïque vers le circuit de détection de température ;
le circuit de détection de température est configuré pour détecter une température de la couche d'isolation thermoconductrice ; et
le dispositif de commande est configuré pour détecter une température d'au moins l'une des bornes photovoltaïques sur la base de la température de la couche d'isolation thermoconductrice.

2. Onduleur photovoltaïque selon la revendication 1, dans lequel, entre l'une des bornes photovoltaïques et le circuit de détection de température, la carte de circuit imprimé comprend un chemin thermoconducteur constitué de la couche d'isolation thermoconductrice et du joint de connexion, au niveau duquel l'une des bornes photovoltaïques est connectée à la carte de circuit imprimé.

3. Onduleur photovoltaïque selon la revendication 1 ou 2, dans lequel chaque couche d'isolation thermoconductrice comprend un matériau thermoconducteur, et le matériau thermoconducteur est recouvert d'un matériau d'isolation.

4. Onduleur photovoltaïque selon la revendication 3, dans lequel le matériau thermoconducteur comprend un ou plusieurs des éléments suivants : du graphite, de la feuille de cuivre ou de la feuille d'aluminium.

5. Onduleur photovoltaïque selon la revendication 3, dans lequel le matériau d'isolation comprend un ou plusieurs des éléments suivants : de la résine époxy, du caoutchouc silicone, de la céramique d'isolation ou du verre.

6. Onduleur photovoltaïque selon la revendication 3, dans lequel le matériau thermoconducteur forme une couche thermoconductrice, le matériau d'isolation forme une couche d'isolation, une surface supérieure et une surface inférieure de la couche thermoconductrice sont laminées séparément avec la couche d'isolation, pour former la couche d'isolation thermoconductrice, et la couche d'isolation recouvre et est fixée à la couche thermoconductrice laminée.

7. Onduleur photovoltaïque selon l'une quelconque des revendications 1 à 6, dans lequel le circuit de détection de température comprend spécifiquement un premier circuit de détection de température et un second circuit de détection de température, la pluralité de bornes photovoltaïques et le convertisseur sont respectivement disposés des deux côtés de la carte de circuit imprimé, la carte de circuit imprimé comprend une première couche d'isolation thermoconductrice et une seconde couche d'isolation thermoconductrice, la première couche d'isolation thermoconductrice est proche d'un côté du convertisseur et la seconde couche d'isolation thermoconductrice est proche d'un côté de la pluralité de bornes photovoltaïques ;
le premier circuit de détection de température est configuré pour détecter une température de la première couche d'isolation thermoconductrice ;
le second circuit de détection de température est configuré pour détecter une température de la seconde couche d'isolation thermoconductrice ; et
le dispositif de commande est configuré pour obtenir la température de chacune de la pluralité de bornes photovoltaïques sur la base des températures de la première couche d'isolation thermoconductrice et de la seconde couche d'isolation thermoconductrice.

8. Onduleur photovoltaïque selon l'une quelconque des revendications 1 à 7, dans lequel l'onduleur photovoltaïque comprend en outre un panneau de montage, la structure de boîtier est munie d'une encoche, le convertisseur est disposé à l'intérieur de la structure de boîtier, le panneau de montage est muni de trous traversants destinés à être traversés par les bornes photovoltaïques, et le panneau de montage est configuré pour être monté sur la structure de boîtier et obturer l'encoche.

9. Onduleur photovoltaïque selon la revendication 8, dans lequel des éléments d'étanchéité ou des plaques déflectrices sont disposés dans les espaces entre les bornes photovoltaïques et les trous traversants, de sorte qu'un environnement étanche soit formé à l'intérieur de la structure de boîtier.

10. Onduleur photovoltaïque selon l'une quelconque des revendications 1 à 9, dans lequel chaque borne photovoltaïque comprend une borne côté carte, une borne côté câble, un premier noyau électroconducteur, un second noyau électroconducteur, un premier câble électroconducteur et un second câble électroconducteur ; un canal qui traverse deux extrémités de la borne côté carte est prévue dans la borne côté carte, le premier noyau électroconducteur est disposé de manière coulissante dans le canal de la borne côté carte, une extrémité du premier câble électroconducteur est sertie sur le premier noyau électroconducteur et l'autre extrémité du premier câble électroconduteur est soudée sur la carte de circuit imprimé ; un canal qui traverse deux extrémités de la borne côté câble est prévue dans la borne côté câble, le second noyau électroconducteur est disposé de manière coulissante dans le canal de la borne côté câble, une extrémité du second câble électroconducteur est sertie sur le second noyau électroconducteur et l'autre extrémité du second câble électroconducteur est connectée au module photovoltaïque ; et
une fois que la borne côté carte est connectée à la borne côté câble, le premier noyau électroconducteur établit une connexion électrique avec le second noyau électroconducteur, de sorte qu'un courant produit par le module photovoltaïque soit entré dans le convertisseur à l'aide de la borne photovoltaïque.

11. Onduleur photovoltaïque selon la revendication 10, dans lequel l'onduleur photovoltaïque comprend en outre un circuit de détection de température de branchement de borne, dans lequel le circuit de détection de température de branchement de borne est disposé au niveau d'une position de branchement entre la borne côté carte et la borne côté câble dans la borne photovoltaïque, et est configuré pour détecter une température au niveau de la position de branchement de la borne photovoltaïque.

12. Onduleur photovoltaïque selon la revendication 1, dans lequel la couche d'isolation thermoconductrice est intégrée au circuit imprimé et disposée entre le circuit de détection de température et le joint de connexion, au niveau duquel l'une des bornes photovoltaïques est connectée à la carte de circuit imprimé.

13. Appareil de détection de température, appliqué à un onduleur photovoltaïque (101),
dans lequel l'appareil de détection de température comprend un circuit de détection de température (106), une carte de circuit imprimé (105) et un dispositif de commande (107),
l'onduleur photovoltaïque comprend une pluralité de bornes photovoltaïques et un convertisseur (104),
et la pluralité de bornes photovoltaïques sont configurées pour être connectées en conséquence à une pluralité de modules photovoltaïques ;
la carte de circuit imprimé comprend une couche électroconductrice (1051) et une couche d'isolation thermoconductrice (1052), une extrémité de chaque borne photovoltaïque est connectée à la carte de circuit imprimé ;
la couche électroconductrice est configurée pour transmettre une énergie électrique générée par les modules photovoltaïques au convertisseur, et la couche d'isolation thermoconductrice est configurée pour conduire la chaleur générée par au moins une borne photovoltaïque vers le circuit de détection de température ;
le circuit de détection de température est configuré pour détecter une température de la couche d'isolation thermoconductrice ; et
le dispositif de commande est configuré pour détecter une température d'au moins l'une des bornes photovoltaïques sur la base de la température de la couche d'isolation thermoconductrice.

14. Appareil de détection de température selon la revendication 13, dans lequel, la couche d'isolation thermoconductrice est intégrée au circuit imprimé et disposée entre le circuit de détection de température et le joint de connexion, au niveau duquel au moins l'une des bornes photovoltaïques est connectée à la carte de circuit imprimé.
